# EUROPÄISCHE PATENTANMELDUNG

(11) **EP 1 943 980 A1**
(43) Veröffentlichungstag der Anmeldung: **16.07.2008**
(21) Anmeldenummer: 07000591.3
(22) Anmeldetag: 12.01.2007
(51) Int. Cl.: A61C 8/00, B25B 23/10

(54) **Schraubwerkzeug und Halteelement für ein Schraubwerkzeug**

(71) Anmelder: ZL Microdent-Attachment GmbH & Co. KG, 58339 Breckerfeld (DE)
(72) Erfinder: Böschemeyer, Thomas, 58313 Herdecke (DE); Clostermann, Volkhard-Hagen, 58097 Hagen (DE); Dragotto, Nico, 44536 Lünen (DE)
(74) Vertreter: Kötter, Ulrich

(57) **Zusammenfassung**

Die Erfindung betrifft ein Schraubwerkzeug zur Handhabung einer Schraube insbesondere eines Einsatzes für ein zahnmedizinisches Implantat, wobei an dem Formstück (4) des Schraubwerkzeugs Mittel zur kraftschlüssigen Verbindung mit dem Schraubenkopf angeordnet sind. Die Erfindung betrifft weiterhin ein Halteelement (5) für ein Schraubwerkzeug, umfassend einen Haltekopf (51), der in den Formausschnitt eines Schraubenkopfes einpressbar ist, und einen Zapfen (52), der in der Aufnahme (41) eines Schraubwerkzeuges fixierbar ist.

## Beschreibung

Die Erfindung betrifft ein Schraubwerkzeug nach dem Oberbegriff des Patentanspruchs 1. Die Erfindung betrifft weiterhin ein Halteelement nach dem Patentanspruch 6.

Der Einsatz zahnmedizinischer Implantate ist fester Bestandteil der Zahnmedizin. Gattungsgemäße Implantate sind in den unterschiedlichsten Ausführungen bekannt und werden entweder in künstliche in einen Kiefer eingebrachte Öffnungen eingeschraubt oder - sofern der Knochenkontaktbereich eine Implantats der Wurzelform eines extrahierten Zahnes nachgebildet wurde - in das so entstandene leere Zahnfach eingesetzt. Für den nachfolgenden knöchernen Einheilprozess wird in das Implantat eine Einheilkappe eingeschraubt. Zum Ende des knöchernen Einheilprozesses wird die Einheilkappe chirurgisch freigelegt und anschließend entfernt. Nachfolgend wird in das Implantat ein Gingivaformer eingeschraubt, welcher die Abheilung des Zahnfleisches beeinflusst. Nach vollständiger Abheilung des Zahnfleisches wird der Gingivaformer entfernt und es wird ein Abformpfosten in das Implantat eingeschraubt, wonach ein Abdruck für die Zahntechnik erstellt wird, welche basierend hierauf den Endaufbau sowie die Zahnkrone fertigt. Nach Fertigstellung des Endaufbaus wird der Gingivaformer entfernt und der Endaufbau in das Implantat eingesetzt.

Sowohl im Zuge der Befestigung des Implantats im Kieferknochen mit Hilfe eines Insertionsaufsatzes sowie bei den im Rahmen der Behandlung erforderlichen Einsatzwechseln erfolgt die Befestigung des Insertionsaufsatzes beziehungsweise der Einsätze mittels einer in diesen integrierten Schraube. Unter dem Begriff "Einsatz" wird vorliegend eine in ein Implantat einsetzbare Komponente verstanden. Einsätze sind insbesondere Einheilkappen, Gingivaformer, Abformpfosten und Aufbauten. Jeder dieser Schraubvorgänge birgt die Gefahr des Verlustes einer Schraube beziehungsweise eines Einsatzes und damit verbunden die Gefahr des Verschluckens oder sogar der Aspiration durch den Patienten. Auf Grund der äußerst geringen Bauteilgröße ist die Handhabung dieser Bauteile sehr schwer.

Hier will die Erfindung Abhilfe schaffen. Der Erfindung liegt die Aufgabe zugrunde, ein Schraubwerkzeug zur Handhabung der Schraube insbesondere eines Einsatzes für ein zahnmedizinisches Implantat zu schaffen, welches ein ungewolltes Verlieren der Schraube beziehungsweise des damit verbundenen Bauteils verhindert. Gemäß der Erfindung wird diese Aufgabe durch die Merkmale des kennzeichnenden Teils des Patentanspruchs 1 gelöst.

Mit der Erfindung ist ein Schraubwerkzeug zur Handhabung der Schraube insbesondere eines Einsatzes für ein zahnmedizinisches Implantat geschaffen, welches ein ungewolltes Verlieren der Schraube beziehungsweise des damit verbundenen Bauteils verhindert.

In Weiterbildung der Erfindung ist das Mittel zur kraftschüssigen Verbindung mit der Schraube ein flexibles Halteelement, das in den Formausschnitt des Schraubenkopfes einpressbar ist. Hierdurch ist eine einfache Handhabung, verbunden mit einer sicheren Fixierung der Schraube bewirkt.

In Ausgestaltung der Erfindung weist das Formstück eine Aufnahme für das Halteelement auf. Hierdurch ist eine einfache Bestückung des Schraubwerkzeugs mit dem Halteelement ermöglicht.

In weiterer Ausgestaltung der Erfindung ist das Halteelement in der Aufnahme lösbar gehalten. Hierdurch ist ein einfacher Wechsel des Halteelements ermöglicht. Auch Halteelemente unterschiedlicher Außendurchmesser sind hierdurch einsetzbar.

Bevorzugt ist die Aufnahme einer Sackbohrung, an deren Innenwandung eine Nut eingebracht ist. Eine derartige Aufnahme ist einfach zu fertigen; durch das Vorsehen der Nut ist eine einfache Fixierung des Halteelements innerhalb der Aufnahme ermöglicht.

Der Erfindung liegt weiterhin die Aufgabe zugrunde, ein Halteelement für ein Schraubwerkzeug zur Handhabung der Schraube insbesondere eines Einsatzes für ein zahnmedizinisches Implantat zu schaffen, welches ein ungewolltes Verlieren der Schraube beziehungsweise des damit verbundenen Bauteils verhindert. Gemäß der Erfindung wird diese Aufgabe durch die Merkmale des Patentanspruchs 6 gelöst.

Mit der Erfindung ist ein Halteelement zum Einsatz in die Aufnahme eines Schraubwerkzeugs zur Handhabung der Schraube insbesondere eines Einsatzes für ein zahnmedizinisches Implantat geschaffen, welches ein ungewolltes Verlieren der Schraube beziehungsweise des damit verbundenen Bauteils verhindert.

In Weiterbildung der Erfindung ist an dem Zapfen ein Rastelement zum Einrasten in die Aufnahme eines Schraubwerkzeugs angeordnet. Hierdurch ist eine einfache Fixierung des Halteelements innerhalb der Aufnahme des Schraubwerkzeugs ermöglicht. Bevorzugt ist das Rastelement eine umlaufende Wulst.

In Ausgestaltung der Erfindung ist der Zapfen schmaler als der Haltekopf ausgebildet. Hierdurch ist eine zusätzliche Anlage des Haltekopfs an dem äußeren Rand des Schraubwerkzeugs erzielt.

Bevorzugt ist der Haltekopf zumindest teilweise hohl ausgebildet. Hierdurch ist eine besondere Flexibilität erzielt, welche das Einbringen des Haltekopfes in die Schraube des Einsatzes vereinfacht; durch die Rückstellkraft des Halteelements wird eine kraftschlüssige Verbindung zwischen Halteelement und Schraube erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

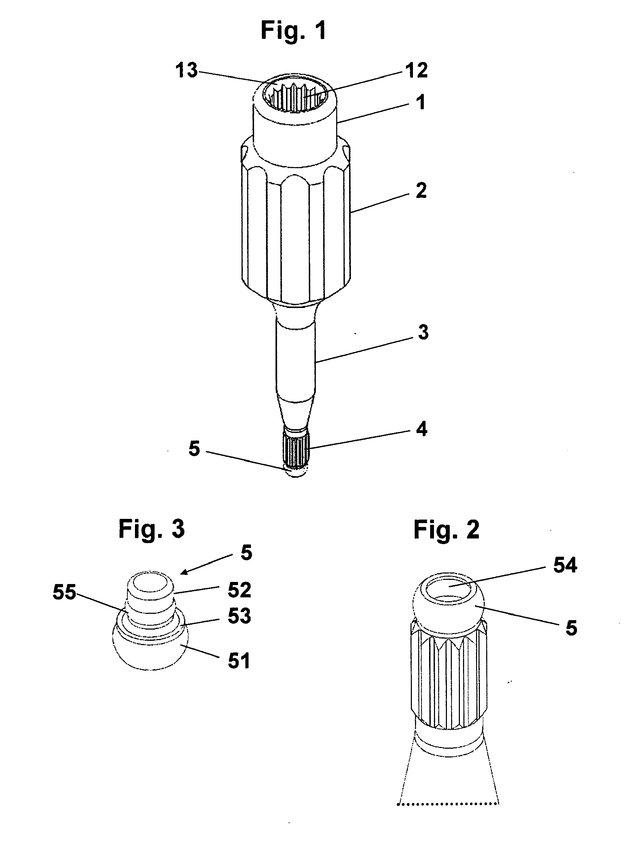

- Figur 1: die dreidimensionale Darstellung eines Schraubwerkzeugs mit eingesetztem Halteelement;
- Figur 2: die Detailansicht des Formstücks des Schraubwerkzeugs aus Figur 1;
- Figur 3: die dreidimensionale Darstellung eines Halteelements;
- Figur 4: die schematische Darstellung des Schraubwerkzeugs gemäß Figur 1 mit eingesetztem Daumenstück und
- Figur 5: die Detailansicht des Formstücks des Schraubwerkzeugs aus Figur 1 mit eingesetztem Halteelement in teilweiser Schnittdarstellung.

Das als Ausführungsbeispiel gewählte Schraubwerkzeug ist im Wesentlichen als rotationssymmetrisches Drehteil ausgeführt, welches in vier Abschnitte unterteilbar ist: An seinem oberen Ende ist ein Einführungszapf 1 mit glatter Außenfläche zur Aufnahme eines - nicht dargestellten - Gegenhalters angeordnet, an dem sich ein Griffstück 2 anschließt. Das Griffstück 2 ist außen umlaufend als Außenvielkant ausgebildet. In den Einführungszapf 1 ist mittig eine Sackbohrung 11 eingebracht, welche bis in das Griffstück 2 hinein ragt. Im Bereich des Einführungszapfes 1 ist die Innenwandung der Sackbohrung 11 mit einem Innenvielkant 12 versehen, dessen nach Außen gerichtete Oberseite als Innenkonus 13 ausgebildet ist. Der Innenvielkant 12 dient der Aufnahme eines - nicht dargestellten - Drehmomentschlüssels. Im Ausführungsbeispiel ist in die Sackbohrung 11 des Einführungszapfes 1 ein Daumenstück 6 mit einem drehbaren Teller 61 eingebracht.

An das Griffstück 2 ist ein Schaft 3 angeformt. Der Schaft 3 ist im Wesentlichen zylindrisch ausgeführt. An seinem Ende ist ein Vielkantstück 4 zum Eingriff in eine Vielkantschraube angeformt. Alternative Ausgestaltungen des Formstücks für andere Schraubarten (z. B. Kreuzschlitz-Schrauben) sind möglich. In das Vielkantstück 4 ist zentrisch eine Sackbohrung 41 eingebracht. An dem äußeren Rand der Sackbohrung 41 ist ein Innenkonus 42 eingebracht, der mit dem am äußeren Ende des Vielkantstücks 4 eingebrachten Außenkonus 44 einen umlaufenden Rand bildet. Oberhalb des Innenkonus 42 ist in die Innenwandung der Sackbohrung 41 eine umlaufende Nut 43 eingebracht.

Das als Ausführungsbeispiel gewählte Halteelement 5 ist als rotationssymmetrisches Kunststoffteil ausgebildet. Das Halteelement 5 besteht im Wesentlichen aus einem Haltekopf 51, an den ein Zapfen 52 angeformt ist. An seiner dem Zapfen 52 zugewandten Seite ist an den Haltekopf 51 ein umlaufender Ring 53 angeformt. Zur Erhöhung der Flexibilität ist in den Haltekopf 51 eine Bohrung 54 eingebracht. Weiterhin ist an dem Zapfen 52 eine umlaufende Wulst 55 als Rastelement angeformt. Alternative Ausgestaltungen des Halteelements, beispielsweise als einschraubbares oder anklebbares Element sind möglich.

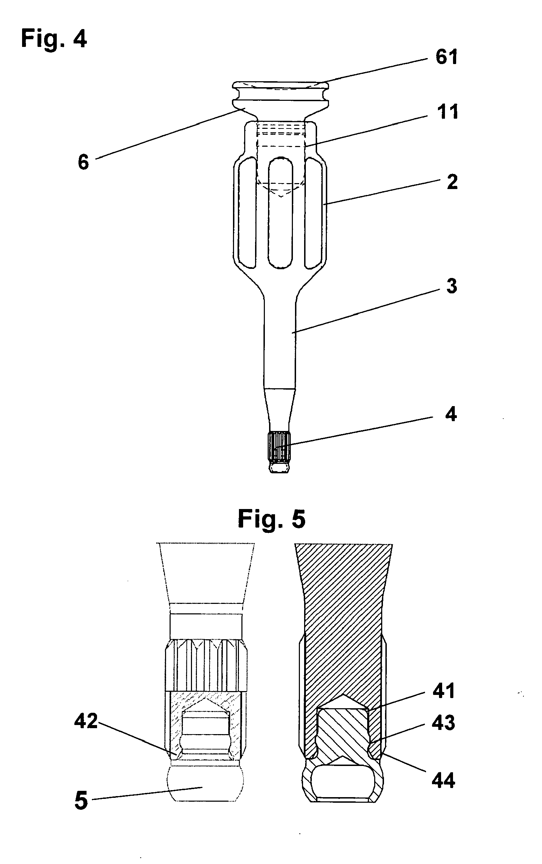

Das Halteelement 5 wird derart an dem Vielkantstück 41 des Schraubwerkzeugs fixiert, dass der Zapfen 52 in die Sackbohrung 41 eingeführt wird, so dass die Wulst 55 in die Nut 43 des Vielkantstücks 4 eingreift. Gleichzeitig hintergreift der durch den Außenkonus 44 und den Innenkonus 42 des Vielkantstücks 4 gebildete Rand den Ring 53 des Halteelements 5 (vgl. Fig. 5).

Das erfindungsgemäße Schraubwerkzeug ermöglicht eine zuverlässige Aufnahme einer mit einem Einsatz verbundenen Schraube und verhindert somit ein ungewolltes Verschlucken oder Aspirieren des Einsatzes durch den Patienten. Der flexible Haltekopf 51 des Halteelements 5 wird in die mit einem Vielkant versehene Sackbohrung des Schraubenkopfes des Einsatzes eingepresst. Durch die kraftschlüssige Verbindung zwischen Halteelement 5 und Schraubenkopf ist ein ungewolltes Verlieren der Schraube verhindert.

## Patentansprüche

1. Schraubwerkzeug zur Handhabung einer Schraube, insbesondere eines Einsatzes für ein zahnmedizinisches Implantat, mit einem Formstück 4 zur Verbindung mit dem Schraubenkopf, **dadurch gekennzeichnet, dass** an dem Formstück 4 Mittel 5 zur kraftschlüssigen Verbindung mit dem Schraubenkopf angeordnet sind.

2. Schraubwerkzeug nach Anspruch 1, **dadurch gekennzeichnet, dass** das Mittel 5 zur kraftschlüssigen Verbindung mit der Schraube ein flexibles Halteelement ist, das in den Formausschnitt des Schraubenkopfes einpressbar ist.

3. Schraubwerkzeug nach Anspruch 2, **dadurch gekennzeichnet, dass** das Formstück 4 eine Aufnahme 41 für das Halteelement 5 aufweist.

4. Schraubwerkzeug nach Anspruch 3, **dadurch gekennzeichnet, dass** das Halteelement 5 in der Aufnahme 41 lösbar gehalten ist.

5. Schraubwerkzeug nach einem der Ansprüche 3 und 4, **dadurch gekennzeichnet, dass** die Aufnahme 41 eine Sackbohrung ist, an deren Innenwandung eine Nut 43 eingebracht ist.

6. Halteelement zum Einsatz in die Aufnahme 41 eines Schraubwerkzeugs nach einem der vorgenannten Ansprüche, umfassend einen Haltekopf 51, der in den Formausschnitt eines Schraubenkopfes einpressbar ist, und einen Zapfen 52, der in der Aufnahme 41 eines Schraubwerkzeuges fixierbar ist.

7. Halteelement nach Anspruch 6, **dadurch gekennzeichnet, dass** an dem Zapfen 52 ein Rastelement 55 zum Einrasten in die Aufnahme 41 eines Schraubwerkzeugs angeordnet ist.

8. Haltelement nach einem der Ansprüche 6 und 7, **dadurch gekennzeichnet, dass** das Rastelement 55 eine umlaufende Wulst ist.

9. Halteelement nach einem der Ansprüche 6 bis 8, **dadurch gekennzeichnet, dass** der Zapfen 52 schmaler als der Haltekopf 51 ausgebildet ist.

10. Halteelement nach einem der Ansprüche 6 bis 9, **dadurch gekennzeichnet, dass** der Haltekopf 51 zumindest teilweise hohl ausgebildet ist.
